Europäisches Patentamt

**European Patent Office**

Office européen des brevets

(11) Publication number: **0 087 628**
**B1**

(12) # EUROPEAN PATENT SPECIFICATION

(45) Date of publication of patent specification: **17.09.86**

(51) Int. Cl.⁴: **B 64 G 1/28,** F 16 C 32/04, G 05 D 1/08

(21) Application number: **83101230.7**

(22) Date of filing: **09.02.83**

(54) **Magnetic bearing wheel for an artificial satellite.**

(30) Priority: **26.02.82 JP 30417/82**

(43) Date of publication of application:
**07.09.83 Bulletin 83/36**

(45) Publication of the grant of the patent:
**17.09.86 Bulletin 86/38**

(84) Designated Contracting States:
**DE FR GB**

(56) References cited:
**DE-A-2 847 930**
**US-A-3 937 533**
**US-A-4 065 189**

**IFAC SYMPOSIUM 1976, Automatic Control in Space, pages 849-860, R. SINDLINGER et al.: "Magnetic bearing momentum wheels with vernier gimballing capability for 3-axis active attitude control and energy storage"**

**JOURNAL OF SPACECRAFT, vol. 12, July 1975, pages 420-427, New York, USA A.V. SABNIS et al.: "Magnetically suspended large momentum wheel"**

(73) Proprietor: **MITSUBISHI DENKI KABUSHIKI KAISHA**
**2-3, Marunouchi 2-chome Chiyoda-ku Tokyo 100 (JP)**

(72) Inventor: **Inoue, Masao c/o Mitsubishi Denki K.K.**
**Central Research Laboratory No. 80, Aza Nakano Minami Shimizu Amagasaki-shi Hyogo (JP)**

(74) Representative: **Lehn, Werner, Dipl.-Ing. et al Hoffmann, Eitle & Partner Patentanwälte Arabellastrasse 4 (Sternhaus) D-8000 München 81 (DE)**

(56) References cited:
**JOURNAL OF SPACECRAFT, vol. 17, no. 2, March-April 1980, pages 93-98, New York, USA P.C. POUBEAU: "Satellite flywheels with magnetic bearings and passive radial centering"**

## Description

The present invention relates to a magnetic bearing wheel for an artificial satellite comprising a stator provided with permanent magnet means and an electromagnet means; a rotor facing said stator and spaced apart therefrom; and sensor means adapted to detect axial displacement of said rotor. Such a magnetic bearing wheel can have its speed and axis of rotation adjusted in accordance with a change in the attitude of the artificial satellite in order to control it.

A known magnetic bearing wheel of this type is disclosed in GB—A—2 035 622.

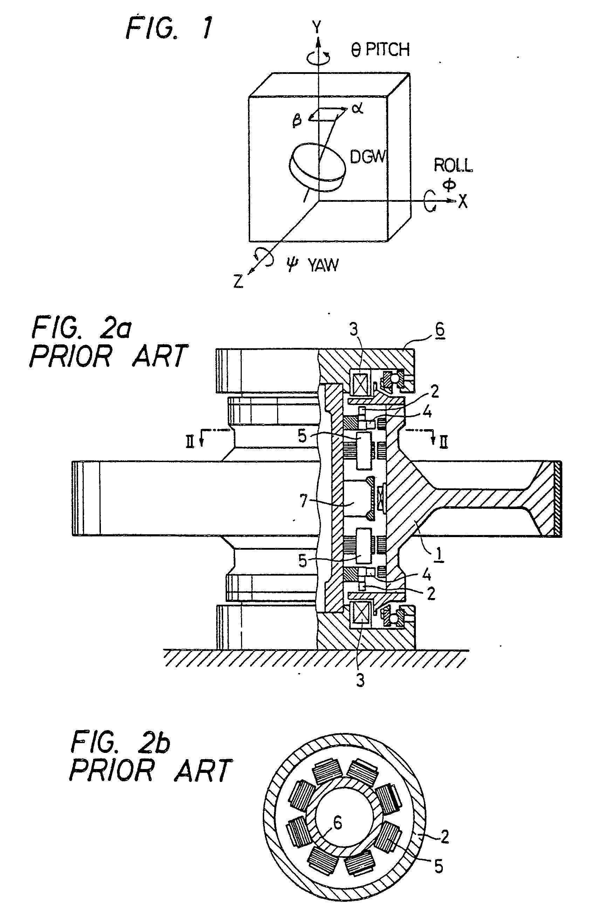

The attitude of an artificial satellite is controlled as generally illustrated in Figure 1 of the accompanying drawings. The angles of rotation of an artificial satellite about three axes, x, y and z are called its attitude angles designated as $\phi$ (roll), $\theta$ (pitch), and $\psi$ (yaw), respectively. A wheel usually has an axis of rotation which is parallel to the axis y, and rotates at a constant speed. The wheel is supported by a magnetic bearing so that its axis of rotation may be slightly inclined toward the x or z axis at an angle $\alpha$ or $\beta$, respectively. Accordingly, it is possible to control the angle $\psi$ about the yaw axis by varying the angle $\alpha$, the angle $\phi$ about the roll axis by varying the angle $\beta$, and the angle $\theta$ about the pitch axis by varying the rotational speed of the wheel.

The attitude control for the satellite may be performed by an apparatus as shown in Figures 2a and 2b of the accompanying drawings. The apparatus includes a rotor 1, an axial displacement sensor 2, an electromagnet 3 providing an attractive force controlled in accordance with an output signal from the sensor 2 to move the rotor 1 to a fixed axial position, a radial displacement sensor 4 for detecting the radial displacement of the rotor 1, an electromagnet 5 providing an attractive force controlled in accordance with an output signal from the sensor 4 to move the rotor 1 to a fixed radial position, a stator 6, and a motor 7 for driving the rotor 1. A pair of sensors 4 and a pair of electromagnets 5 are provided to enable the rotor 1 to be restored to its original position when its axis of rotation has been inclined.

Thus, the six degrees of freedom of the rotor 1, with the exception of its rotatory displacement about its axis of rotation, are completely controlled by the sensor and electromagnet combinations. Therefore, the rotor 1 can be rotated without being brought into any contact with the stator 6. The apparatus is, thus, advantageous in various respects as a system for controlling the attitude of an artificial satellite.

Five sensor and electromagnet combinations are, however, required for effecting the radial control of the rotor 1 along the x and y axes which are perpendicular to each other and to the axis of rotation of the rotor 1, designated as the z axis, its axial control along the z axis, and the control of inclination of its axis of rotation, i.e. its angular displacement about the x or y axis.

In GB—A—2 035 622, the stator comprises two annular rings on each of which are provided four extensions each carrying a respective control coil for active radial control, so that eight coils are provided altogether.

An axially polarised annular permanent magnet is mounted between the two annular rings for passive stabilization in the axial direction.

Although as an option additional sensors may be provided for detecting large axial movements, there is no disclosure or suggestion of how to correct for such axial movement other than the passive axial control.

Tilting movements are detected and controlled by differential radial rotor movement as a result of offsetting the rotor centre of gravity out of the radial bearing plane.

This may give rise to difficulty in correcting a pure radial rotor displacement without tilting of the rotor.

Another example of a system for actively controlling five modes of operation, namely an axial translation, two radial translations and two tilting motions, is found in a paper by R. S. Sindlinger entitled "Magnetic Bearing Momentum Wheels with Vernier Gimballing Capability for 3-Axis Active Attitude Control and Energy Storage", appearing in the 1976 IFAC Symposium "Automatic Control in Space".

In the magnetic bearing wheels as hereinabove described, the radial displacement electromagnets do not produce a magnetic flux which is uniform along the circumference of the wheel. Therefore, an eddy current appears in the rotor and creates resistance to its rotation. Since all control is effected by electromagnetic force, the apparatus consumes much power even during normal operation, and requires a complicated control circuit.

In another publication entitled "Satellite Flywheels with Magnetic Bearings and Passive Radial Centering" by P. C. Poubeau, appearing in the AIAA "Journal of Spacecraft", vol. 17, no. 2, March-April 1980, the use of passive permanent magnet radial bearings is disclosed. However, the stator is of one piece with the permanent magnets being in the form of continuous annular rings. The radial bearing, the axial bearing and the radial dampers are separate from each other and spaced along the axis of the wheel. The radial damper does not provide for the positive control of the inclination of the axis of rotation.

Journal of Spacecraft, Vol. 12, No. 7 publishes a paper by A. V. Sabnis et al: "A Magnetically Suspended Large Momentum Wheel".

This disclosure suggests use of a radial-passive, axial active bearing system, the stator employing a single permanent magnet in the form of an annular ring.

Again no provision is made for positive control of rotor inclination, it being assumed, apparently, that the passive radial control is adequate. This is not the case in a real-life system.

An object of the present invention is to provide a magnetic bearing wheel which although capable of utilizing a simplified control circuit, employing a permanent magnet for a bearing, can effect inclination, axial and radial control.

According to the invention, the magnetic bearing wheel defined in the first paragraph of this specification is characterised in that said stator is a multi-part stator having at least three segments each provided with a respective permanent magnet and a respective electromagnet means; in that said sensor means are arranged to detect tilting of said rotor relative to the axis of rotation of said wheel and in that said electromagnet means are selectively controllable in response to outputs from said sensor means to correct both said axial displacement and said tilting of the rotor.

For a better understanding of the invention, and to show how the same may be carried into effect, reference will now be made, by way of example, to the accompanying drawings, in which:

Figure 1 illustrates schematically the attitude control of an artificial satellite;

Figure 2(a) is a side elevational view, partly in section, of a known magnetic bearing apparatus;

Figure 2(b) is a bottom plan view of the apparatus shown in Figure 2(a);

Figure 3(a) is a fragmentary top plan view of a magnetic bearing according to one embodiment of the invention for the attitude control of an artificial satellite;

Figure 3(b) is a side elevational view, partly in section, of the apparatus shown in Figure 3(a);

Figure 4 is a schematic view illustrating the axial control achieved by the apparatus shown in Figures 3(a) and (b);

Figure 5 is a schematic view illustrating the radial control achieved by the apparatus shown in Figures 3(a) and (b);

Figure 6 is a schematic view illustrating the control of inclination of the axis of rotation achieved by the apparatus shown in Figures 3(a) and (b);

Figures 7(a) is a fragmentary top plan view of a magnetic bearing according to another embodiment of the invention for the attitude control of an artificial satellite;

Figure 7(b) is a side elevational view, partly in section, of the apparatus shown in Figure 7(a);

Figure 8 is a schematic view illustrating the axial control achieved by the apparatus shown in Figures 7(a) and (b);

Figure 9 is a schematic view illustrating the radial control achieved by the apparatus shown in Figures 7(a) and (b);

Figure 10 is a schematic view illustrating the control of inclination of the axis of rotation achieved by the apparatus shown in Figures 7(a) and (b); and

Figure 11 is a schematic perspective view of a three-part bearing according to the present invention.

First Embodiment

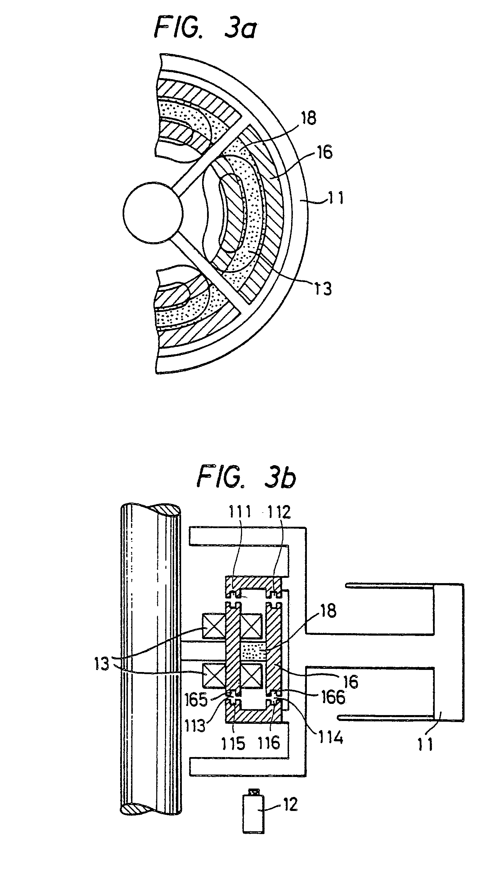

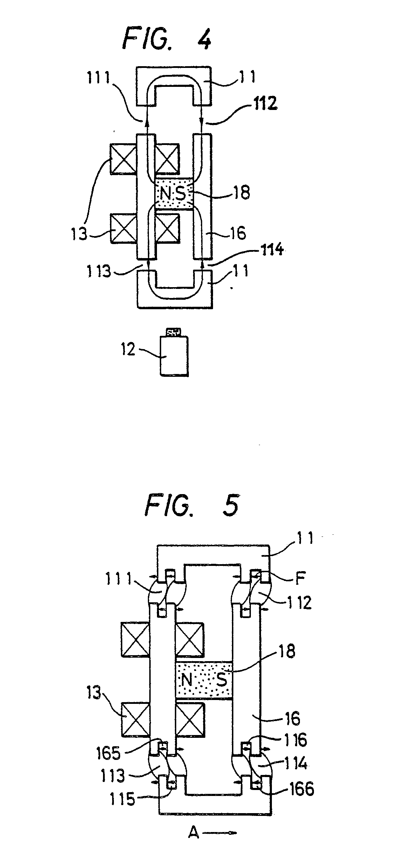

Referring first to Figures 3(a) and (b) of the drawings, there is shown a magnetic bearing wheel according to one embodiment of the present invention. The wheel includes a rotor 11 which is bifurcated at its inner circumference, and a stator 16 composed at four segments as shown in Figure 3(a). Each segment of the stator 16 is provided with a radially magnetized permanent magnet 18, and a pair of axially aligned electromagnets 13 between which the permanent magnet 18 is disposed, as shown in Figure 4. Radially spaced apart gaps are provided between the rotor 11 and the stator 16, i.e. an inner gap 111 and an outer gap 112 are formed above the stator 16, and an inner gap 113 and an outer gap 114 below the stator 16, as shown in Figure 3(b). The mutually facing portions of the rotor 11 and the stator 16, between which the gaps are defined, preferably have mutually facing recesses 115 and 165, and 116 and 166, as shown in, for example, Figure 3(b). A sensor 12 is provided for detecting axial displacement of the rotor.

Various aspects of operation of the magnetic bearing as hereinabove described will now be described.

(1) *Axial Control*

Referring to Figure 4, the magnetic flux of the permanent magnet 18 flows up through the upper inner gap 111, and down through the lower inner gap 113. If the rotor 11 is displaced upwardly, the upper gap 111 is widened, while the lower gap 113 is narrowed. This change is detected by the sensor 12, and depending on the amount of the change, a certain amount of electric current is supplied by a control circuit to the electromagnets 13 to raise the density of the magnetic flux in the upper gap 111 and lower the same in the lower gap 113 so that an increased downward attractive force may be generated to restore the rotor 11 from its displacement. This, the attractive force of the permanent magnet is adjusted in accordance with any axial displacement of the rotor 11 to control its axial displacement. By virtue of its permanent magnet, the magnetic bearing has the advantage that the electromagnets 13 require only a very small amount of electric current, since the attractive force of the permanent magnet is vertically balanced when the rotor 11 is in the neutral position of the bearing.

(2) *Radial Control*

The radial control of the magnetic bearing is of a passive nature and does not require any particular sensor, coil or like part. Figure 5 shows the rotor in a slightly radially displaced position. The recesses in the mutually facing portions of the rotor and the stator define teeth which increase the density of the magnetic flux in the gaps 111 to 114. If the rotor 11 is displaced radially outwardly in the direction of an arrow A, the flow of the magnetic flux is directed to the sides of the teeth, and there results an attractive force F having a direction opposite to that of the radial displacement of the rotor. The attractive force of the permanent magnet works reliably against any such radial displacement of the rotor; therefore, no positive control is required therefor.

## (3) *Control of the Axis of Rotation upon Inclination Thereof*

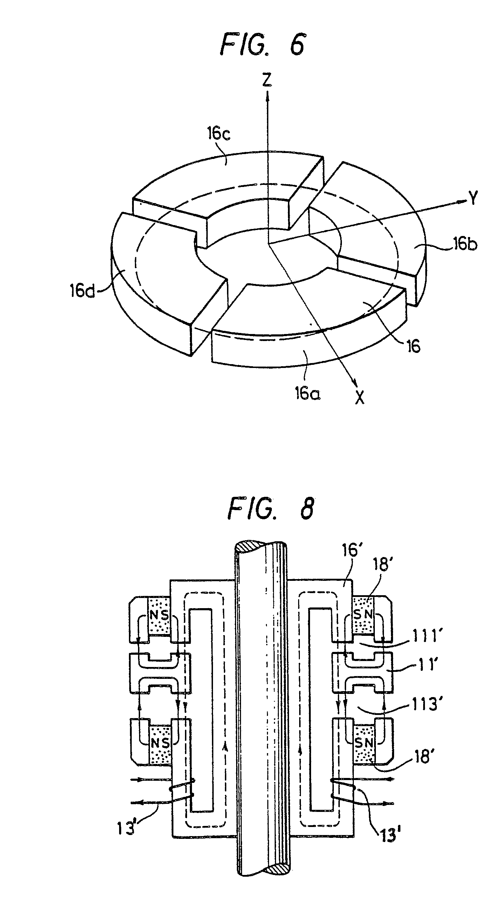

Referring to Figure 6, the stator 16 is comprised of four segments 16a, 16b, 16c and 16d intended for controlling any displacement of the axis of rotation. If the rotor has made a slight angle of rotation about the x-axis, the rotor is displaced upwardly relative to the stator segment 16b, and downwardly relative to the stator segment 16d. Accordingly, the rotary displacement of the rotor about the x-axis can be controlled if appropriate axial control of the rotor is effected in respect of the stator segments 16b and 16d. The same is true of the displacement of the rotor about the y-axis. In other words, the electromagnets of segments 16b and 16d or of 16a and 16c can be respectively energised for upwards and downwards adjustment.

### Second Embodiment

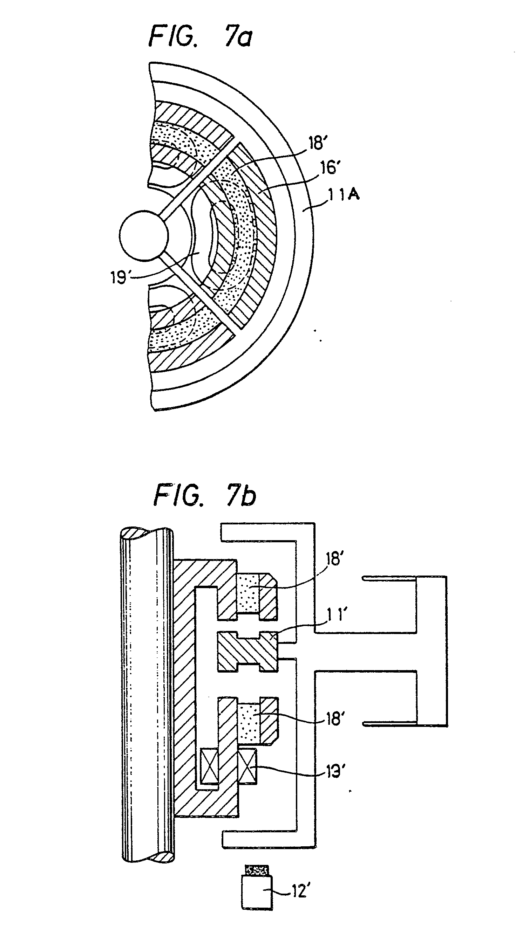

Referring to Figures 7(a) and 7(b), there is shown another embodiment of the present invention. The apparatus shown in Figures 7(a) and 7(b) is different from the apparatus of Figures 3(a) and 3(b) in that it has a portion 11′ of a rotor 11A disposed within a stator 16′. Each stator segment has two permanent magnets 18′ and one electromagnet 13′.

The following is a description of the operation of the apparatus shown in Figures 7(a) and 7(b).

### (1) *Axial Control*

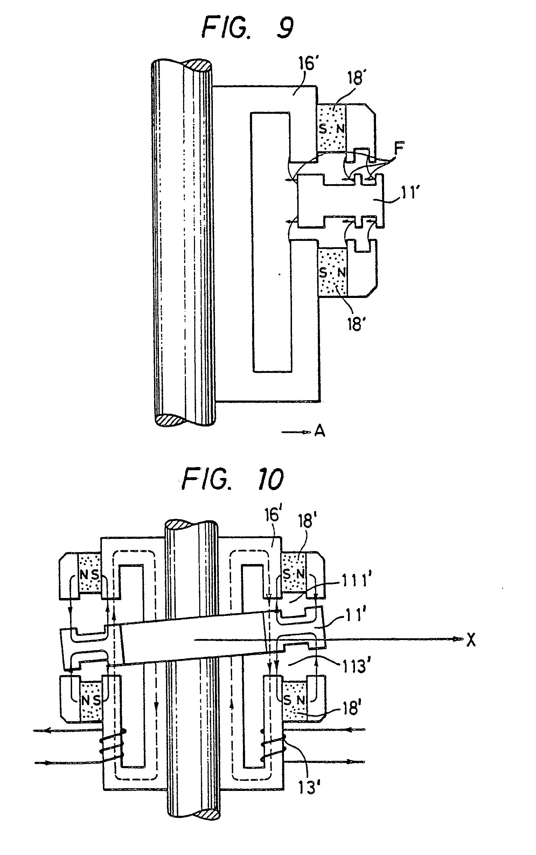

As shown in Figure 8, an upper gap 111′ and a lower gap 113′ are defined between the rotor portion 11′ and the stator 16′, and the magnetic flux of the upper permanent magnet 18′ flows upwards through the left-hand side of the upper gap 111′, and the flux of the lower permanent magnet 18′ flows downwards through the left-hand side of the lower gap 113′, as indicated by solid arrow lines. If the rotor portion 11′ is displaced upwardly, the upper gap 111′ is narrowed, while the lower gap 113′ is widened. This displacement is detected by the sensor 12′, and depending on the amount of such displacement, a certain amount of electric current is supplied by a control circuit to the electromagnet 13′ to develop a magnetic flux as indicated by broken lines. Accordingly, the density of the magnetic flux is lowered in the upper gap 111′, and raised in the lower gap 113′, whereby an increased downward attractive force is generated to rectify the displacement of the rotor portion 11′. Thus, the attractive forces of the permanent magnets are adjusted in accordance with any axial displacement of the rotor portion 11′ to control its axial displacement. By virtue of its permanent magnets, the magnetic bearing has the advantage that the electromagnet 13′ requires only a very small amount of electric current, since the attractive forces of the permanent magnets 18′ are vertically balanced when the rotor 11A stays in the neutral position of the bearing.

### (2) *Radial Control*

The radial control of the magnetic bearing is of a passive nature, and does not require any particular sensor, coil or like device. Figure 9 shows the rotor in a slightly radially displaced position. The recesses in mutually facing portions of the rotor and the stator define teeth which increase the density of the magnetic flux in the gaps between the rotor and the stator. If the rotor 11A is displaced radially outwardly in the direction of an arrow A, the flow of the magnetic flux is directed to the sides of the teeth, and there results an attractive force F having a direction opposite to that of the radial displacement of the rotor. The attractive forces of the permanent magnets work reliably against any such radial displacement of the rotor and therefore, no positive control is ever required therefor.

### (3) *Control of the Axis of Rotation upon Inclination Thereof*

If the rotor 11A makes a slight angle of rotation about the y-axis, those two of the four bearing segments which stay on the x-axis have different gaps between the rotor and the stator, as shown in Figure 10. If an electric current is supplied to the electromagnet 13, the magnetic flux flowing through each stator segment 16 flows in opposite directions on the "+" and "−" sides of the x-axis. Accordingly, an attractive force is generated to lower the rotor 11A on the "+" side of the x-axis and lift it on the "−" side thereof, whereby the axis of rotation of the bearing can be controlled satisfactorily against any inclination. Any rotatory displacement of the rotor about the x-axis can likewise be rectified by utilizing the control coils connected to the "+" and "−" sides of the y-axis.

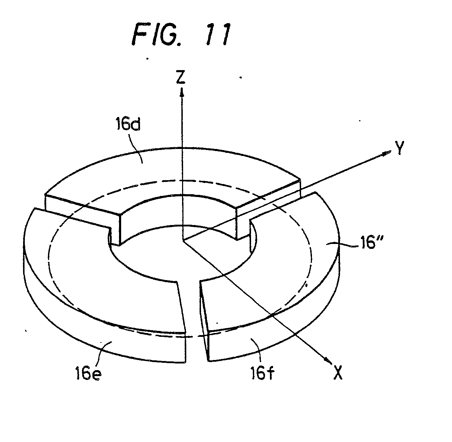

Although the apparatus has been described as having a stator composed of four segments, it is also possible to employ a stator 16″ composed of three segments 16d, 16e and 16f as shown in Figure 11, or any other appropriate number of segments (which should however be symmetrically arranged), though different control circuits may have to be provided. Furthermore, the permanent magnets may be magnetised axially instead of radially if appropriately positioned.

A magnetic bearing according to the invention comprises at least three or four segments each provided with at least one permanent magnet which enables the axial positional control of the rotor, and simultaneously accomplishes the control of the rotor against rotatory displacement. The apparatus does not require any sensor or electromagnet for the radial position control of the rotor. The apparatus is therefore relatively simple in construction since it requires fewer sensors and electromagnets and is free from eddy current loss of the nature generated by electromagnets for radial position control, resulting advantageously in a drastically reduced resistance to rotation.

**Claims**

1. A magnetic bearing wheel for controlling the attitude of an artificial satellite, comprising
a stator (16; 16′) provided with permanent magnet means (18; 18′) and an electromagnet means (13; 13′);
a rotor (11; 11A) facing said stator (16; 16′) and spaced apart therefrom; and
sensor means (12; 12′) adapted to detect axial displacement of said rotor; characterised in that said stator is a multi-part stator having at least three segments each provided with a respective permanent magnet (18, 18′) and a respective electromagnet means (13; 13′); in that said sensor means are arranged to detect tilting of said rotor (11; 11A) relative to the axis of rotation of said wheel and in that said electromagnet means are selectively controllable in response to outputs from said sensor means to correct both said axial displacement and said tilting of the rotor.

2. A magnetic bearing wheel according to claim 1 characterised in that mutually facing portions of said rotor (11; 11A) and said stator (16; 16′) are formed with mutually facing recesses which serve for position control of said rotor when radial displacement thereof has occurred.

3. A magnetic bearing wheel according to claim 1 or 2 characterised in that each said permanent magnet means (18; 18′) is magnetized radially or axially relative to said wheel.

4. A magnetic bearing wheel according to any one of claims 1 to 3 characterised in that said stator segments are symmetrical with respect to said axis of rotation.

5. A magnetic bearing wheel according to any one of claims 1 to 4 characterised in that said rotor (11) is bifurcated along its inner circumference, and said stator (16) is interposed between the bifurcated portions of said rotor.

6. A magnetic bearing wheel according to claim 5 characterised in that said permanent magnet means comprises one permanent magnet member (18) in each stator segment.

7. A magnetic bearing wheel according to any one of claims 1 to 4 characterised in that said rotor (11A) has a portion (11′) disposed in a gap defined between mutually opposed portions of the stator (16′).

8. A magnetic bearing wheel according to claim 7 characterised in that said permanent magnet means comprises two permanent magnet members (18′) in each stator segment.

9. A magnetic bearing wheel according to any one of the preceding claims characterised in that mutually facing portions of said rotor and said stator define therebetween two gaps which are differently spaced from said axis of rotation.

10. An artificial satellite characterised by a magnetic bearing wheel according to any one of the preceding claims arranged to control the attitude thereof.

**Patentansprüche**

1. Magnetisch gelagertes Rad zum Steuern der Lage eines künstlichen Satelliten, enthaltend einen Stator (16; 16′) mit Permanentmagnetmittel (18; 18′) und Elektromagnetmittel (13; 13′); einen Rotor (11; 11A) zum Stator hin gerichtet und von diesem mit einem Zwischenraum angeordnet; und Sensormittel (12; 12′), angepaßt zum Erfassen einer axialen Verschiebung des Rotors; dadurch gekennzeichnet, daß der Stator ein mehrteiliger Stator mit mindestens drei Segmenten mit je einem entsprechenden Permanentmagneten (18; 18′) und entsprechenden Elektromagnetmitteln (13; 13′) ist; daß die Sensormittel zum Erfassen des Kippens des Rotors (11; 11A) in bezug auf die Rotationsachse des Rades angeordnet sind, und daß die Elektromagnetmittel im Ansprechen auf Ausgangsrößen der Sensormittel selektiv steuerbar sind, um die axiale Verschiebung und das Kippen des Rotors zu korrigieren.

2. Magnetisch gelagertes Rad nach Anspruch 1, dadurch gekennzeichnet, daß gegenüberliegende Teile des Rotors (11; 11A) und des Stators (16; 16′) mit gegenüberliegenden Vertiefungen versehen sind, welche zur Lageregelung des Rotors dienen, wenn eine radiale Verschiebung dieser aufgetreten ist.

3. Magnetisch gelagertes Rad nach Anspruch 1 oder 2, dadurch gekennzeichnet, daß jedes Permanentmagnetmittel (18; 18′) radial oder axial in bezug auf das Rad magnetisiert sind.

4. Magnetisch gelagertes Rad nach einem der Ansprüche 1 bis 3, dadurch gekennzeichnet, daß die Statorsegmente in bezug auf die Rotationsachse symmetrisch sind.

5. Magnetisch gelagertes Rad nach einem der Ansprüche 1 bis 4, dadurch gekennzeichnet, daß der Rotor (11) entlang des inneren Umfangs gabelförmig geteilt ist und der Stator (16) zwischen den gegabelten Teilen des Rotors eingebracht ist.

6. Magnetisch gelagertes Rad nach Anspruch 5, dadurch gekennzeichnet, daß die Permanentmagnetmittel aus einem Permanentmagnetmittel (18) in jedem Stator bestehen.

7. Magnetisch gelagertes Rad nach einem der Ansprüche 1 bis 4, dadurch gekennzeichnet, daß der Rotor (11A) einen Teil (11′), angeordnet in einem Spalt definiert zwischen gegenüberliegenden Teilen des Stators (16′), hat.

8. Magnetisch gelagertes Rad nach Anspruch 7, dadurch gekennzeichnet, daß die Permanentmagnetmittel aus zwei Permanentmagnetteilen (18′) in jedem Statorsegment bestehen.

9. Magnetisch gelagertes Rad nach einem der vorhergehenden Ansprüche, dadurch gekennzeichnet, daß gegenüberliegende Teile des Rotors und des Stators zwischen sich zwei Spalte definieren, welche in unterschiedlichen Abständen von der Rotationsachse angeordnet sind.

10. Künstlicher Satelliet, gekennzeichnet durch ein magnetisches Lagerrad nach einem der vorhergehenden Ansprüche, angeordnet zur Steuerung dessen Lage.

## Revendications

1. Volant à paliers magnétiques pour la commande de l'orientation d'un satellite artificiel, constitué par

un stator (16; 16') pourvu d'un ensemble d'aimants permanents (18; 18') et d'un ensemble d'électro-aimants (13; 13');

un rotor (11; 11A) faisant face au stator (16; 16') et séparé de celui-ci; et

un ensemble de capteurs (12; 12') adapté à la détection du déplacement axial du rotor; caractérisé en ce que le stator est un stator en plusieurs parties comportant au moins trois segments, chacun pourvu d'un aimant permanent respectif (13; 13'); et en ce que l'ensemble de capteurs est disposé de façon à détecter l'oscillation du rotor (11; 11A) par rapport à l'axe du volant et que l'ensemble d'électro-aimants peut être commandé sélectivement en réaction aux signaux de sortie de l'ensemble de capteurs, de façon à corriger aussi bien le déplacement axial que les oscillations du rotor.

2. Volant à paliers magnétiques selon la revendication 1 caractérisé en ce que des portions se faisant face mutuellement du rotor (11; 11A) et du stator (16; 16') sont formées avec des cavités se faisant face mutuellement qui servent à la commande de position du rotor lorsqu'un déplacement radial de celui-ci a été effectué.

3. Volant à paliers magnétiques selon les revendications 1 ou 2 caractérisé en ce que chaque ensemble d'aimants permanents (18; 18') est magnétisé radialement ou axialement par rapport au volant.

4. Volant à paliers magnétiques selon l'une quelconque des revendications 1 à 3 caractérisé en ce que les segments de stator sont symétriques par rapport à l'axe de rotation.

5. Volant à paliers magnétiques selon l'une quelconque des revendications 1 à 4 caractérisé en ce que le rotor (11) est bifurqué le long de sa circonférence intérieure, et le stator 16 est interposé entre les portions bifurquées du rotor.

6. Volant à paliers magnétiques selon la revendication 5 caractérisé en ce que l'ensemble d'aimants permanents comprend un aimant permanent (18) dans chaque segment de stator.

7. Volant à paliers magnétiques selon l'une quelconque des revendications 1 à 4 caractérisé en ce que le rotor (11A) présente une portion (11') disposée dans une fente définie entre des portions mutuellement opposées du stator (16').

8. Volant à paliers magnétiques selon la revendication 7 caractérisé en ce que l'ensemble d'aimants permanents comprend deux aimants permanents (18') dans chaque segment de stator.

9. Volant à paliers magnétiques selon l'une quelconque des revendications précédentes caractérisé en ce que les portions se faisant face mutuellement du rotor et du stator définissent entre elles deux fentes qui sont espacées différemment de l'axe de rotation.

10. Satellite artificiel caractérisé par un volant à paliers magnétiques selon l'une quelconque des revendications précédentes, disposé de façon à commander l'orientation du satellite.

## FIG. 1

## FIG. 2a
## PRIOR ART

## FIG. 2b
## PRIOR ART

## FIG. 3a

18
16
11
13

## FIG. 3b

111   112
18
13
16
165   166
113
115   116   114
11
12

## FIG. 4

## FIG. 5

0 087 628

FIG. 6

FIG. 8

4

## FIG. 7a

18'

16'

11A

19'

## FIG. 7b

18'

11'

18'

13'

12'

## FIG. 9

## FIG. 10

# FIG. 11